(19) Europäisches Patentamt
European Patent Office
Office européen des brevets

(11) **EP 4 379 596 A1**

(12) **EUROPEAN PATENT APPLICATION**
published in accordance with Art. 153(4) EPC

(43) Date of publication:
**05.06.2024 Bulletin 2024/23**

(51) International Patent Classification (IPC):
**G06F 40/109** (2020.01)   **G06F 40/106** (2020.01)
**G06F 40/166** (2020.01)

(21) Application number: **21954891.4**

(86) International application number:
**PCT/CN2021/142042**

(22) Date of filing: **28.12.2021**

(87) International publication number:
**WO 2023/024376 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.08.2021 CN 202110988381**

(71) Applicants:
• **Beijing Kingsoft Office Software, Inc.**
  **Beijing 100085 (CN)**

• **Zhuhai Kingsoft Office Software Co., Ltd**
  **Zhuhai, Guangdong 519080 (CN)**

(72) Inventors:
• **CAO, Zonghua**
  **Zhuhai, Guangdong 519080 (CN)**
• **LIU, Huan**
  **Zhuhai, Guangdong 519015 (CN)**
• **LUO, Jiarui**
  **Zhuhai, Guangdong 519015 (CN)**

(74) Representative: **Bandpay & Greuter**
  **11 rue Christophe Colomb**
  **75008 Paris (FR)**

(54) **TEXT TYPESETTING**

(57) The present disclosure relates to text typesetting methods and apparatuses, electronic devices, servers and computer readable storage media and belongs to the field of computer technologies. In an example of the present disclosure, when the method is applied to a local application running in a terminal device, the method includes: determining an original font used by a target text; determining whether the local application supports the original font; in response to that the local application does not support the original font, obtaining character measurement data of the original font; displaying the target text with a first font supported by the local application; and typesetting, based on the character measurement data of the original font, the displayed target text.

FIG. 2

## Description

## TECHNICAL FIELD

The present disclosure relates to the field of computer technologies, and in particular to text typesetting methods and apparatuses, electronic devices and storage media.

## BACKGROUND

When a terminal device opens a file using a local application, if there is no original font of this file, a typographic layout presented by the file may differ greatly from its original typographic layout, affecting the aesthetics and reading experiences of the file. At present, a general method is to install the missing font under the current environment. However, the general method requires search, download and install the font and the font is also possibly to be paid separately. Therefore, it is difficult to promote and apply this method on large scale. As a result, it is necessary to propose a new text typesetting method.

## SUMMARY

One purpose of the embodiments of the present disclosure is to provide a new technical solution for text typesetting, so as to maintain consistency between file typesetting and original typesetting in a case of font loss.

According to a first aspect of the present disclosure, there is provided a text typesetting method. The method includes: determining an original font used by a target text; determining whether a local application supports the original font; in response to that the local application does not support the original font, obtaining character measurement data of the original font; displaying the target text with a first font supported by the local application; and typesetting, based on the character measurement data of the original font, the displayed target text.

According to a second aspect of the present disclosure, there is provided a text typesetting method. The method includes: receiving a font identifier of an original font of a target text from a terminal device; obtaining, based on the font identifier of the original font, character measurement data of the original font; sending the character measurement data of the original font to the terminal device such that the terminal device typesets, based on the character measurement data of the original font, the target text displayed with a first font supported by a local application of the terminal device.

According to a third aspect of the present disclosure, there is provided a text typesetting apparatus. The apparatus includes: a first determining module, configured to determine an original font used by a target text; a second determining module, configured to determine whether a local application supports the original font; an obtaining module, configured to obtain, in response to that the local application does not support the original font, character measurement data of the original font; a typesetting module, configured to typeset, based on the character measurement data of the original font, the target text displayed with a first font supported by the local application of the terminal device.

According to a fourth aspect of the present disclosure, there is provided a text typesetting apparatus. The apparatus includes: a receiving module, configured to receive a font identifier of an original font of a target text from a terminal device; a retrieving module, configured to obtain character measurement data of the original font based on the font identifier of the original font; a sending module, configured to send the character measurement data of the original font to the terminal device, such that terminal device typesets, based on the character measurement data of the original font, the target text displayed with a first font supported by a local application of the terminal device.

According to a fifth aspect of the present disclosure, there is further provided an electronic device, including a memory and a processor, where the memory is configured to store computer programs; the processor is configured to execute the computer programs to perform the method of the first or second aspect of the present disclosure.

According to a sixth aspect of the present disclosure, there is further provided a computer readable storage medium, storing computer programs, where the computer programs are executed by a processor to perform the method of the first aspect of the present disclosure or the method of the second aspect of the present disclosure.

The embodiments of the present disclosure have the following beneficial effect: if the local application does not support the original font of the target text, the local application uses the first font supported by itself to display the target text and typesets the target text based on the character measurement data of the original font. Thus, the local application can still maintain consistency between file typesetting and original typesetting in spite of loss of the original font.

By the following detailed descriptions of the exemplary embodiments of the present disclosure with reference to the drawings, other features and advantages of the embodiments of the present disclosure will become apparent.

## BRIEF DESCRIPTION OF DRAWINGS

The accompanying drawings incorporated into the specification to constitute a part of the specification illustrate the embodiments of the present disclosure and interpret the principle of the embodiments of the present disclosure together with the specification.

FIG. 1 is a schematic diagram illustrating a file processing system according to embodiments of the present disclosure.

FIG. 2 is a flowchart illustrating a text typesetting method according to embodiments of the present disclosure.

FIGS. 3(a) and (b) are schematic diagrams illustrating character measurement data provided by embodiments of the present disclosure.

FIG. 4 is an example diagram illustrating a text typesetting method according to embodiments of the present disclosure.

FIG. 5 is a flowchart illustrating a text typesetting method according to embodiments of the present disclosure.

FIG. 6 is a schematic diagram illustrating a hardware structure of an electronic device according to embodiments of the present disclosure.

FIG. 7 is a schematic diagram illustrating a hardware structure of a server according to embodiments of the present disclosure.

## DETAILED DESCRIPTION

Various exemplary embodiments of the present disclosure will be detailed by referring to accompanying drawings. It should be noted that unless otherwise indicated, the relative positions, the numerical expressions and values for describing the components and steps in these embodiments do not limit the scope of protection of the present disclosure.

The following descriptions for at least one exemplary embodiment are only illustrative and shall not be taken as any limitation to the present disclosure and its application or use.

The technologies, methods and devices well known to those skilled in the arts will not be detailed herein, but in proper cases, these technologies, methods and devices shall be considered as a part of the specification.

In all examples illustrated and discussed herein, any specific value shall be interpreted as merely illustrative rather than limiting. Therefore, in other examples of the illustrative embodiments, there may be a different value.

It should be noted that like numerals and letters represent like items in the following drawings and thus, once one item is defined in one drawing, it is not necessary to further discuss this item in subsequent drawings.

<text typesetting method>

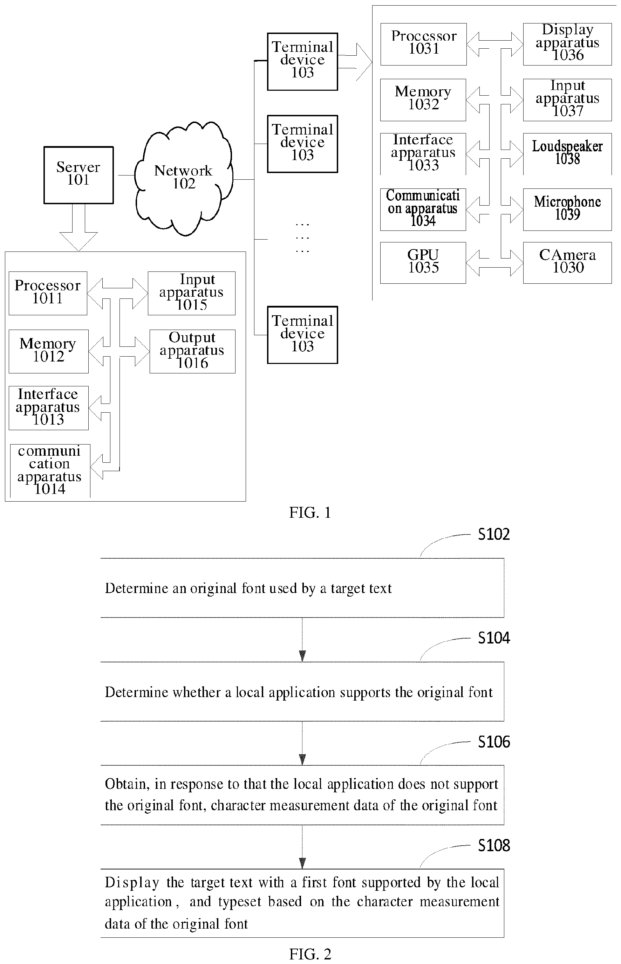

FIG. 1 is a block diagram illustrating a file processing system according to embodiments of the present disclosure. As shown in FIG. 1, the file processing system includes a server 101 and a terminal device 103. The server 101 may communicate with the terminal device 103 via a network 102.

A configuration of the server 101 may include but not limited to a processor 1011, a memory 1012, an interface apparatus 1013, a communication apparatus 1014, an input apparatus 1015 and an output apparatus 1016. The processor 1011 may include but not limited to a Central Processing Unit (CPU) and a micro-processing unit (MCU) and the like. The memory 1012 may include but not limited to: a Read Only Memory (ROM), a Random Access Memory (RAM), and a non-volatile memory of a hard-disk drive and the like. The interface apparatus 1013 may include but not limited to a USB interface, a serial interface, a parallel interface and the like. The communication apparatus 1014 can, for example, perform wired or wireless communication and may include WiFi communication, Bluetooth communication, and communications of 2G/3G/4G/5G and the like. The input apparatus 1015 includes but not limited to a keyboard, a mouse, a touch screen, a microphone and the like. The output apparatus 1016 includes but not limited to a display screen, a loudspeaker and the like. The configuration of the server 101 may also only include some of the above apparatuses.

The terminal device 103 may be an electronic device installed with a smart operating system (e.g., Android, IOS, Windows and Linux and the like), which includes but not limited to a portable computer, a table computer, a smart phone, a tablet computer and the like. A configuration of the terminal device 103 may include but not limited to a processor 1031, a memory 1032, an interface apparatus 1033, a communication apparatus 1034, a Graphics Processing Unit (GPU) 1035, a display apparatus 1036, an input apparatus 1037, a loudspeaker 1038, a microphone 1039, and a camera 1030. The processor 1031 may include but not limited to a Central Processing Unit (CPU) and a micro-processing unit (MCU) and the like. The memory 1032 may include but not limited to: a Read Only Memory (ROM), a Random Access Memory (RAM), and a non-volatile memory of a hard-disk drive and the like. The interface apparatus 1033 may include but not limited to a USB interface, a serial interface, a parallel interface and the like. The communication apparatus 1034 can, for example, perform wired or wireless communication and may include WiFi communication, Bluetooth communication, and communications of 2G/3G/4G/5G and the like. The GPU 1035 is configured to process images. The display apparatus 1036 includes but not limited to a liquid crystal display, a touch screen and the like. The input apparatus 1037 includes but not limited to a keyboard, a mouse, a touch screen and the like. The configuration of the terminal device 103 may also only include some of the above apparatuses.

In an embodiment applied in the present disclosure, a user may open a target text and perform typesetting and editing on the target text by using the terminal device 103. This local application may be, for example, a file editing software, an instant communication software, an office software or a browser or the like. In an example, the user may register an account in the local application and then log into the account to use the typesetting method provided by the embodiments of the present disclosure.

In an example, the local application is an application running in the terminal device, for example, a native application, a Web application, a hybrid application, or a light application or the like. The native application refers to an application program capable of directly running in the current operating system. The Web application refers to a webpage application running in a browser. The hybrid application refers to a combination of the native application and the Web application, and usually refers to a native application embedded with a browser. The light application is an application program which can be used without downloading and installing it, and the user may search and use it or use it by directly scanning a code.

The file processing system shown in FIG. 1 is only illustrative and does not constitute any limitation to the embodiments of the present disclosure and its application or use. Those skilled in the arts should understand that, although multiple apparatuses of the server and the terminal device are described above, the embodiments of the present disclosure may only involve some apparatuses therein. For example, the server may only include a processor, a memory and a communication apparatus, and the terminal device may include a processor, a memory, a communication apparatus, an input apparatus, and a display screen. Those skilled in the arts can design the instructions based on the solutions disclosed in the embodiments of the present disclosure. However, how to control the processor to operate by the instructions is a well-known technique in the arts and will not be repeated herein.

As shown in FIG. 2, an embodiment of the present disclosure provides a text typesetting method. The method includes steps S102 to S108. The steps S102 to S108 may be performed by a terminal device.

At step S 102, an original font used by a target text is determined.

In an embodiment of the present disclosure, the target text may be any partial text of a file. In an example, the terminal device obtains original font information of the target text from the file, and thus determines an original font used by the target text. Generally, the original font information may be stored in file data of the file.

In an embodiment of the present disclosure, the fonts may include fonts loaded into an operating system of the terminal device, or fonts loaded into a client (e.g., browser or application end or the like) of the terminal device, or fonts stored in a server, or fonts carried in a file. A file can carry (include) fonts but a file carrying fonts usually has a large data volume. Furthermore, the fonts loaded into the operating system of the terminal device, the fonts loaded into the client of the terminal device, and the fonts carried in the file all belong to fonts which can be supported by the local application of the terminal device, and thus can be collectively called local fonts. The fonts stored in the server can be called server fonts or cloud fonts.

At step S104, whether a local application supports the original font is determined.

After the original font used by the target text is determined, it is checked whether all fonts supported by the local application include the original font. If the original font is not included, it is determined that the local application does not support the original font.

The fonts supported by the local application may be determined based on a font pack installed therein. In an example, if a font pack of a particular font is installed in the local application, it indicates that the local application supports this font. Generally, multiple font packs popular among people are pre-installed in a basic data packet of the local application, and one font therein is set to a default font. If the user wants to use some non-popular special fonts, the user needs to download a corresponding font pack separately. For example, if the operating system or local application of the terminal device is loaded with the original font, or the original font is stored in the target text, it is considered that the local application supports the original font, and otherwise, does not support the original font.

At step S106, in response to that the local application does not support the original font, character measurement data of the original font is obtained.

The characters in the embodiments of the present disclosure refer to words and symbols, where the symbols include but not limited to punctuation symbols, numerical symbols, mathematical symbols, special symbols and the like, and the words include but not limited to Chinese characters and letters and the like.

In an embodiment of the present disclosure, the character measurement data of the fonts includes a height and a width of a character. The character measurement data of the original font includes a character width of the original font and a character height of the original font, both of which refer to a width and a height of the character in the target text under the original font state. For a same font, under a same font size, the sizes of different characters may be designed as same or different. If, for a same font, under a same font size, all characters are not designed as a same size, a mapping relationship between character and character width/height under this font size may be established. In this case, the mapping relationship may be used as the character measurement data of the corresponding font, and based on the mapping relationship, the width and height of each character under the corresponding font size can be obtained.

In an example, the character measurement data further includes an ascent-descent value of a character.

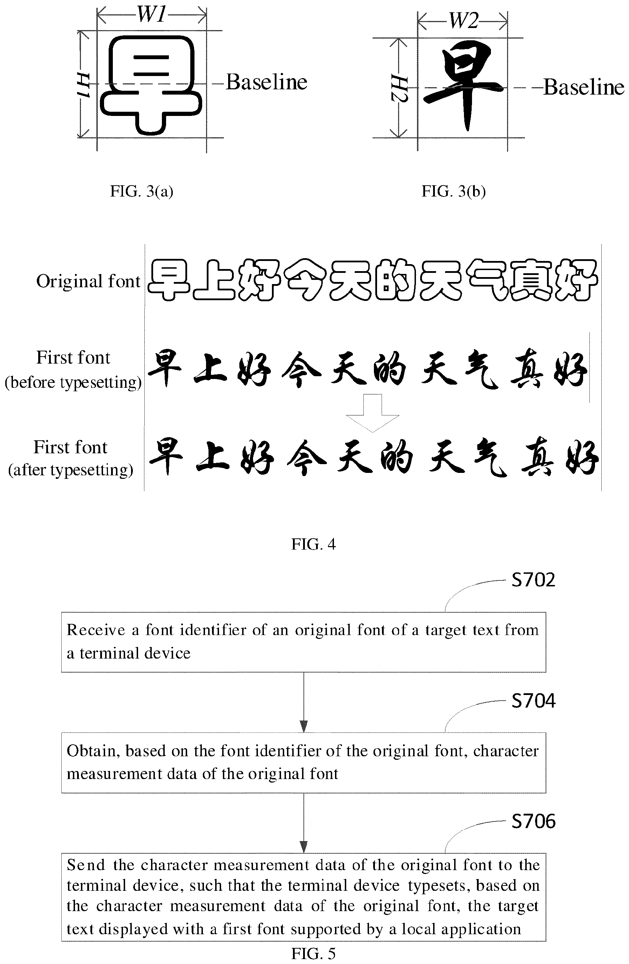

As shown in FIGS. 3(a) and (b), for a same Chinese character "早", the widths and heights of two different fonts under a same font size are also different, and their ascent-descent values are also different. The width and height of the font shown in FIG. 3(b) are both smaller than those of the font shown in FIG. 3 (a). The ascent-descent value of the font shown in FIG. 3 (a) is 0, namely, the font neither ascends nor descends relative to a baseline. The ascent-descent value of the font shown in FIG. 3(b) is a positive value, namely, the font ascends relative to the baseline. If the ascent-descent value of the font is a negative value, it means that the font descends relative to the baseline.

In an example, the character measurement data may also include other features for describing the position and/or size of the character, which is not limited herein.

In an example, the character measurement data of a font may be obtained by measuring the character (e.g., specifically an image model of the character). For example, the target text is displayed in advance with a particular font, and then the character measurement data of the target text under this font is measured so as to obtain the character measurement data of this font.

In an example, the character measurement data of various fonts under various font sizes may be pre-stored in the server.

In an example, the terminal device may obtain the character measurement data of the original font by retrieving the character measurement data corresponding to the original font from a local cache of the terminal device.

In an example, the terminal device obtaining the character measurement data of the original font includes: obtaining the character measurement data of the original font from the local cache of the terminal device; if the character measurement data of the original font is not obtained from the local cache of the terminal device, obtaining the character measurement data of the original font from the server. In this example, the terminal device may, after obtaining the character measurement data of the original font from the server, store the character measurement data in the local cache, such that the character measurement data of this font can be directly read from the local cache when this font is needed again.

At step S108, the target text is displayed with a first font supported by the local application and typeset based on the character measurement data of the original font.

In an example, the terminal device displays the target text with the first font based on an original font size of the target text, and based on the character measurement data of the original font, typesets the target text displayed with the first font.

Before the target text is displayed with the first font supported by the local application, the method further includes steps of determining the first font. In an embodiment of the present disclosure, the terminal device selects the first font matching the original font from all fonts supported by the local application. The descriptions about these steps will be made below with an example.

Example 1 for determining the first font: selecting the first font matching the original font from all fonts supported by the local application may include steps S202 to S206.

At step S202, a substitute font list of the original font is obtained.

In an example, for any one font, a matching degree between the font and other fonts is firstly measured to select fonts with the matching degree reaching a matching degree threshold as substitute fonts of the font. In an embodiment of the present disclosure, the matching degree between two fonts may be determined based on the character measurement data of the two fonts. For any one font, a substitute font list may be established based on the substitute fonts of the font, where the substitute fonts in the substitute font list are ranked in a descending order of matching degree. The terminal device may obtain the substitute font list of each font from the server.

With a font A as an example, descriptions are made below on how to determine the matching degree between a font B and the font A.

A difference value between a width of a character C of the font A and a width of the character C of the font B is calculated as a first difference value.

A difference value between a height of the character C of the font A and a height of the character C of the font B is calculated as a second difference value. The character C may be a single character or a character string formed by multiple characters.

In an example, based on an absolute value of the first difference value, the matching degree between the font B and the font A is determined. The larger the absolute value of the first difference value is, the lower the matching degree between the font B and the font A is; the smaller the absolute value of the first difference value is, and the higher the matching degree between the font B and the font A is.

In an example, based on an absolute value of the second difference, the matching degree between the font B and the font A is determined. The larger the absolute value of the second difference value is, the lower the matching degree between the font B and the font A is; the smaller the absolute value of the second difference value is, and the higher the matching degree between the font B and the font A is.

In an example, a sum value of the absolute value of the first difference and the absolute value of the second difference value is calculated, and then based on the sum value, the matching degree between the font B and the font A is determined. The larger the sum value is, the lower the matching degree between the font A and the font B is; the smaller the sum value is, the higher the matching degree between the font A and the font B is.

At step S204, candidate fonts are determined from the substitute fonts in the substitute font list, where the candidate fonts are fonts supported by the local application.

At step S206, a candidate font having a highest matching degree with the original font in the candidate fonts is determined as the first font.

In this example, the candidate fonts supported by the local application are screened out from the substitute fonts in the substitute font list, and then a candidate font with a highest matching degree with the original font (for example, a candidate font ranked topmost in the candidate fonts in which the candidate fonts are ranked in a descending order of matching degree as mentioned above) is selected from the candidate fonts supported by the local application as the first font.

The terminal device can more quickly and more conveniently determine the first font based on the candidate fonts supported by the local application in the substitute font list, without performing complex calculation.

Example 2 for determining the first font: selecting the first font matching the original font from all fonts supported by the local application may include steps S302 to S304.

At step S302, a character type of the target text is determined.

The character type includes a first type and a second type. The first type refers to that the characters of the target text are Chinese square characters which have basically same heights and widths. The second type refers to that the characters of the target text include letters, Roman characters, Mongolian characters, or Arabic characters or the like or a mixture of multiple languages, which may have different widths or different heights.

At step S304, based on a preset rule associated with the character type of the target text, the first font matching with the original font is selected from all fonts supported by the local application.

In this example, the first font is determined based on the rule corresponding to the character type of the target text. The descriptions are made below on how to determine the first font with an example 3, an example 4, an example 5 and an example 6.

The example 3 for determining the first font: selecting the first font matching the original font from all fonts supported by the local application may include steps S402 to S406.

At step S402, the character measurement data of the candidate fonts is obtained, where the candidate fonts are fonts supported by the local application.

At step S404, a typesetting direction of the target text is determined.

At step S406, in response to that the typesetting direction of the target text is horizontal typesetting, a candidate font with a character width closest to the character width of the original font is determined as the first font. In response to that the typesetting direction of the target text is vertical typesetting, a candidate font with a character height closest to the character height of the original font is determined as the first font.

In response to that the typesetting direction of the target text is horizontal typesetting, for each candidate font, a difference value between the character widths of the characters of the target text under the original font and under the candidate font is calculated as the first difference value. The absolute value of the first difference value is smaller, which indicates that the character width of the candidate font is closer to the character width of the original font. A candidate font with the absolute value of the first difference value being minimal is selected as the first font.

In response to that the typesetting direction of the target text is vertical typesetting, for each candidate font, a difference value between the character heights of the characters of the target text under the original font and under the candidate font is calculated as the second difference value. The absolute value of the second difference value is smaller, which indicates that the character height of the candidate font is closer to the character width of the original font. A candidate font with the absolute value of the second difference value being minimal is selected as the first font.

The example 3 is applicable to a case that the character type of the target text is the first type and/or the second type. That is, when the target text only includes Chinese characters or includes letters and Roman characters, the first font can be determined by applying the method in the example 3.

The example 4 for determining the first font: selecting the first font matching the original font from all fonts supported by the local application may include steps S502 to S508.

At step S502, a font attribute of the original font and a font attribute of the candidate fonts are obtained, where the candidate fonts are fonts supported by the local application.

The font attribute of a font refers to its inherent attribute, which can reflect a style of this font. The font attribute of a font may include one or more of a font weight, a blackening degree, and an oblique degree of this font.

For example, for the font weight of a font, it includes, from bold to light, three attributes, "bold", "normal" and "light". For example, for a blackening degree of a font, it includes two attributes "blackened" and "un-blackened". For example, for an oblique degree of a font, it includes two attributes "obliqued" and "un-obliqued".

For example, for three fonts "SimSun", "STXihei" and "FZCuHeiSongS-B-GB", the font attribute of the "SimSun" is that the font weight is "light", the blackening degree is "un-blackened", and the oblique degree is "un-obliqued"; the font attribute of the "STXihei" is that the font weight is "light", the blackening degree is "blackened", and the oblique degree is "un-obliqued"; and the font attribute of the "FZCuHeiSongS-B-GB" is that the font weight is "bold", the blackening degree is "blackened", and the oblique degree is "un-obliqued".

For example, for two fonts "Times New Roman" and "Forte", the font attribute of the "Times New Roman" is that the font weight is "light", the blackening degree is "un-blackened", and the oblique degree is "un-obliqued"; the font attribute of the "Forte" is that the font weight is "bold", the blackening degree is "blackened", and the oblique degree is "obliqued".

At step S504, the candidate fonts each with the font attribute same as the font attribute of the original font are determined as target fonts, and the character measurement data of the target fonts is obtained.

In an example, the font attribute of a font includes only a font weight. If the candidate fonts and the original font are all "bold", or "normal" or "light", the candidate fonts are considered to have the same font attribute as the original font.

In an example, the font attribute of a font includes a font weight, a blackening degree and an oblique degree of a font. If the candidate fonts are consistent in font weight, blackening degree and oblique degree with the original font, it is considered that the candidate fonts have the same attribute as the original font.

At step S506, a typesetting direction of the target text is determined.

At step S508, in response to that the typesetting direction of the target text is horizontal typesetting, a target font with the character width closest to the character width of the original font is determined as the first font. In response to that the typesetting direction of the target text is vertical typesetting, a target font with the character height closest to the character height of the original font is determined as the first font.

The implementation of the step S508 is similar to the step S406 and will not be repeated herein.

The example 4 is applicable to a case that the character type of the target text is the first type and/or the second type. That is, when the target text includes only Chinese characters or includes letters and Roman characters, the first font can be determined by applying the method in the example 4.

In this example, the candidate fonts with the font attributes different from the font attribute of the original font are filtered out from all candidate fonts, and the candidate fonts each with the font attribute same as the font attribute of the original font are retained as the target fonts, and then the first font is determined from the target fonts based on the character measurement data of the original font, such that the selected first font has basically the same style as the original font. In this way, the target text displayed with the first font supported by the local application is more similar in style to the target text under the original font.

The example 5 for determining the first font: based on a preset rule associated with the character type of the target text, selecting the first font matching the original font from all fonts supported by the local application may include that: the terminal device sends font identifiers of the candidate fonts to the server, such that the server determines the first font from the candidate fonts based on the font attribute of the original font and a width of a preset character string under the original font; then, the server distributes the font identifier of the first font to the terminal device, and the terminal device receives the font identifier of the first font from the server.

The font identifier is used to identify a name or a serial number or the like of a font.

Alternatively, the example 6 for determining the first font: based on a preset rule associated with the character type of the target text, selecting the first font matching the original font from all fonts supported by the local application may include that: the terminal device obtains the font attribute of the original font and a width of a preset character string under the original font from the server, and determines the first font from the candidate fonts based on the font attribute of the original font and the width of the preset character string under the original font.

The candidate fonts are fonts supported by the local application, and the preset character string includes multiple different preset characters. The preset characters in the preset character string should be characters having representativeness in any one of character width or character height. For example, one Chinese character and "w", "z" and "i" having representative width in English are selected to form the preset character string, where "w", "z" and "i" respectively represent three English letters representing different widths, and the preset character string may be "明 WwZzIi".

The examples 5 and 6 are applicable to a case that the character type of the target text is the second type. That is, when the target text includes letters, Roman characters, Mongolian characters, or Arabic characters or the like or a mixture of multiple languages, the first font can be determined by applying the method in the example 5 and example 6. For example, when the character type of the target text is a letter type or a mixture of multiple languages (for example, the target text includes Chinese contents and English contents at the same time, or the target text includes Chinese contents and Japanese contents at the same time), the first font can be determined by applying the method in the example 5 and example 6. The method of determining the first font based on the width of the preset character string may be applied to the cases in which different characters have different character widths, reducing the computation amount and achieving higher efficiency and faster speed.

In an example, the candidate fonts include a default font and non-default fonts supported by the local application. The local application may be pre-installed with a default font, and the terminal device may set a default font during application installation and further, the user can modify the default font based on personal preference.

Determining the first font from the candidate fonts based on the font attribute of the original font and the width of the preset character string under the original font may include steps S602 to S604.

At step S602, if the default font supported by the local application has the same font attribute as the original font, and a similarity between a width of a preset character string under the default font and the width of the preset character string under the original font is in compliance with a preset criterion, the default font is determined as the first font, and otherwise, step S604 is performed.

In an example, determining whether the similarity between the width of the preset character string under the default font and the width of the preset character string under the original font is in compliance with the preset criterion includes steps S6022 to S6026.

At step S6022, a difference value between the width of the preset character string under the default font and the width of the preset character string under the original font is determined as a fourth difference value.

At step S6024, a ratio of an absolute value of the fourth difference value to the width of the preset character string under the original font is determined as a first ratio.

At step S6026, in response to that the first ratio is less than or equal to a preset first threshold, the similarity between the width of the preset character string under the default font and the width of the preset character string under the original font is determined to be in compliance with the preset criterion. In response to that the first ratio is greater than the preset first threshold, the similarity between the width of the preset character string under the default font and the width of the preset character string under the original font is determined to be not in compliance with the preset criterion.

In an example, a similarity between the width and height of the preset character string under the default font and the width and height of the preset character string under the original font being in compliance with a preset criterion may include: the ratio of the width of the preset character string under the default font to the width of the preset character string under the original font being between 0.95 and 1.05, namely, the first ratio being between 0 and 0.05.

At step S604, the candidate fonts having the same font attribute as the original font are determined as the target fonts and the first font is determined from the target fonts.

In the step S604, the candidate fonts having the same font attribute as the original font are selected as the target fonts from all candidate fonts (including the default font and the non-default fonts).

In an example, the step S604 of determining the first font from the target fonts may include: determining the target font with the width of the preset character string closest to the width of the preset character string under the original font as the first font.

A difference value between the widths of the preset character string under the original font and under the target fonts is calculated as a third difference value. For each target font, the absolute value of the third difference value is smaller, which indicates that the widths of the preset character string under the target font and under the original font are closer to each other. The target font with the absolute value of the third difference value being minimal is selected as the first font. In this way, before the target text is typeset, the typographic layout of the target text presented by the local application to the user is relatively similar to the original typographic layout of the target text, which only requires tiny adjustment for typesetting.

In an example, the step S604 of determining the first font from the target fonts may include: determining the target font with the width of the preset character string being minimal as the first font.

By selecting the target font with the width of the preset character string being minimal as the first font, the overlap between characters when the target text is displayed with the first font by the local application can be avoided as possible, and the overlap between characters before typesetting can also be avoided as possible, reducing the reading difficulties for the users.

In this example, considering the font use habit of the user, it is considered that the default font is preferentially taken as the first font for replacing the original font. Further, if the default font has a different font attribute from the original font, or the similarity between the width of the preset character string under the default font and the width of the preset character string under the original font is not in compliance with the preset criterion, the first font is determined from the candidate fonts having the same font attribute as the original font. In this way, the computation amount is reduced and the processing time is saved while the preference of the user is considered.

In the example 2 to example 6 for determining the first font, the implementation manner of determining the similarity and the matching degree between the candidate fonts/the target fonts and the original font can also be applied to determining the substitute fonts in the substitute font list.

In the step S108, the terminal device may, in many ways, display the target text with the first font supported by the local application, and based on the character measurement data of the original font, typeset the target text displayed with the first font, which are illustrated below.

Typesetting example 1: a typesetting direction of the target text is determined, and then based on the typesetting direction of the target text, the target text displayed with the first font by the terminal device is typeset. In response to that the typesetting direction of the target text is horizontal typesetting, first scaling processing is performed on the characters of the target text such that the character width of the target text is consistent with the character width of the original font. In response to that the typesetting direction of the target text is vertical typesetting, second scaling processing is performed on the characters of the target text such that the character height of the target text is consistent with the character height of the original font.

In the example 1, the character scaling can be realized by adjusting the font size.

In an implementation, the step S108 of typesetting the target text displayed by the terminal device based on the character measurement data of the original font may include: obtaining the character measurement data of the first font, and based on the character measurement data of the original font and the character measurement data of the first font, typesetting the target text displayed by the terminal device.

Typesetting example 2: a typesetting direction of the target text is determined, and then based on the typesetting direction of the target text, the target text displayed with the first font by the terminal device is typeset. In response to that the typesetting direction of the target text is horizontal typesetting, a first difference value is determined, where the first difference value is a difference value between a character width of the original font and a character width of the first font. When the first difference is a positive value, abscissa values of the characters of the target text is adjusted. When the first difference value is a negative value, scale-down processing is performed on the characters of the target text. In response to that the typesetting direction of the target text is vertical typesetting, a second difference value is determined, where the second difference value is a difference value between a character height of the original font and a character height of the first font. When the second difference value is a positive value, ordinate values of the characters of the target text is adjusted. When the second difference value is a negative value, scale-down processing is performed on the characters of the target text.

In this example, the scale-down processing on the characters can be realized by adjusting the font size.

The following descriptions are made with the typesetting direction of the target text as horizontal typesetting.

As shown in FIG. 3 (a), the character width of each character under the original font is about W1. As shown in FIG. 3 (b), the character width of each character under the first font is about W2. A difference value DW (=W1-W2) between W1 and W2 is calculated as the first difference value.

If the first difference value DW is a positive value, it indicates that the character width of the first font is less than the character width of the original font. Thus, it is required to adjust the coordinate value of the abscissa of each character of the target text under the first font.

As shown in FIG. 4, the target text is one line of words, including ten Chinese characters "早上好今天的天气真好". Under the original font, the coordinate values of the abscissas of the ten characters are X1, X2,..., X10, and after typesetting, the coordinate values of the abscissas of the ten characters are X1', X2',..., $X_{10}$', thus:

$$X_1' = X_1 + 0.5 * DW,$$

$$X_2' = X_2 + (2-1) * DW + 0.5 * DW,$$

$$\cdots$$

$$X_n' = X_n + (n-1) * DW + 0.5 * DW,$$

$$\cdots$$

$$X_{10}' = X_{10} + (10-1) * DW + 0.5 * DW,$$

where $n$ is an integer, and $1 \leq n \leq 10$.

It can be seen that adjusting the coordinate value of the abscissa of each character in the line of words under the first font is equivalent to adjusting a spacing between adjacent characters in the line of words.

If the first difference value DW is a negative value, it indicates that the widths of the characters of the first font are greater than the widths of the characters of the original font. In this case, by adjusting the coordinate values, overlap between characters may be caused. Therefore, it is required to reduce the font size of the target text displayed with the first font by the terminal device. In an example, based on the ratio of the W1/W2, the font size of the target text displayed with the first font by the terminal device is reduced and the position (coordinate value) of the original target text under the first font is maintained unchanged. For example, W1/W2=R1. If the original font size of this line of words is U1, the font size of this line of words is adjusted to U2, where U2=R1*U1. In this specification, the font size is based on a point system, which is a method of measuring printed fonts well known to those skilled in the arts, for example, 5 points, or 12 points or the like.

The following descriptions are made with the typesetting direction of the target text as vertical typesetting.

As shown in FIG 3 (a), the character height of each character under the original font is H1. As shown in FIG 3 (b), the character height of each character under the first font is H2. A difference value DH (=H1-H2) between H1 and H2 is calculated as a second difference value.

When the second difference value DH is a positive value, it indicates that the character height of the first font is less than the character height of the original font, and thus a coordinate value of an ordinate of each character under the first font is adjusted.

It is assumed that the target text under the original font has a total of M lines of words, and the ordinate values of the characters in each line are same; the ordinate values of the characters from the first line to the M-th line are Y1, Y2,..., YM, and after typesetting, the ordinate values of the characters from the first line to the M-th line are Y1', Y2',..., YM'; thus:

$$Y_1'=Y_1+0.5*DH,$$

$$Y_2'=Y_2+(2-1)*DH+0.5*DH,$$

$$\cdots$$

$$Y_m'= Y_m+(m-1)*DH+0.5*DH,$$

$$\cdots$$

$$Y_M'= Y_M+(M-1)*DH+0.5*DH,$$

where $m$ is an integer, and $1 \leq m \leq M$.

It can be seen that adjusting the coordinate value of the ordinate of each character of the target text under the first font is equivalent to adjusting a line spacing between adjacent lines of the target text.

If the second difference value DH is a negative value, it indicates that the height of the characters of the first font is greater than the height of the characters of the original font. By adjusting the coordinate value, overlap between characters may be caused. Therefore, it is required to reduce the font size of the target text displayed with the first font by the terminal device. In an example, based on the ratio of H1/H2, the font size of the target text displayed with the first font by the terminal device is reduced, and the position (coordinate value) of the original target text under the first font is maintained unchanged. For example, H1/H2=R2. If the original font size of the target text is U1, the font size is adjusted to U2, where U2=R2*U1.

Typesetting example 3: a typesetting direction of the target text is determined, and then based on the typesetting direction of the target text, the target text displayed with the first font by the terminal device is typeset. In response to that the typesetting direction of the target text is horizontal typesetting, the font size of the target text under the first font is adjusted to a first font size, where the first font size is a font size with the character width closest to the character width of the original font; a first difference value is determined, where the first difference value is a difference value between the character width of the original font and the character width of the first font; when the first difference value is a positive value, abscissa values of the characters of the target text are adjusted; when the first difference value is a negative value, scale-down processing is performed on the characters of the target text. In response to that the typesetting direction of the target text is vertical typesetting, the font size of the target text under the first font is adjusted to a second font size, where the second font size is a font size with the character height closest to the character height of the original font; a second difference value is determined, where the second difference value is a difference value between the character height of the original font and the character height of the first font; when the second difference value is a positive value, ordinate values of the characters of the target text are adjusted; when the second difference value is a negative value, scale-down processing is performed on the characters of the target text.

That is, in response to that the typesetting direction of the target text is horizontal typesetting, after the terminal device adjusts the font size of the target text under the first font to the first font size, if the character width is still greater than the character width under the original font, the terminal device reduces the characters by one font size, to avoid mutual overlap between characters.

Similarly, in response to that the typesetting direction of the target text is vertical typesetting, after the terminal device adjusts the font size of the target text under the first font to the second font size, if the character height is still greater than the character height under the original font, the terminal device reduces the characters by one font size, to avoid mutual overlap between characters.

In this example, the scale-down processing on the characters can be realized by adjusting the font size.

After the terminal device typesets the displayed target text, the typesetting of the target text displayed by the terminal device is closer to the typesetting of the target text displayed with the original font. As shown in FIG. 4, for the target text "早上好今天的 天气真好", comparison is made under the original font and the first font, finding that the total width of this line of words under the original font is wider. After typesetting is performed in step S108, the total width of this line of words displayed with the first font by the terminal device is closer to the total width of this line of words under the original font. In this way, it can be guaranteed that one line of words under the original font will not be displayed in different lines due to use of the first font.

Typesetting example 4: performing typesetting on the target text based on the character measurement data of the original font may include steps S1085 to S1087.

At step S1085, the target text is cut into words.

At step S1086, difference values between widths of respective characters in each word under the first font and under the original font is accumulated to obtain an adjustment amount.

At step S1087, a ratio of the adjustment amount to a number of character spacings in the word is calculated as a second ratio, and based on the second ratio, the character spacings in the word are adjusted to enable the character spacings in the word to be same.

For example, one word in the target text has a total of $T$ characters, and the number of the spacings between characters is $G$, where $G=T-1$. The difference values between the widths of respective characters in the $T$ characters under the first font and under the original font are $O_1$, $O_2$, ..., $O_T$, and then $O_1$, $O_2$, ..., $O_T$ are accumulated to obtain the adjustment amount, and then the second ratio of the adjustment amount to the number of the character spacings is calculated. If the second ratio is a positive value, it indicates that the adjustment amount is a positive value and the character spacings in the word should be narrowed, that is, the character spacings in the word are reduced by the second ratio. If the second ratio is a negative value, it indicates that the adjustment amount is a negative value and the character spacings in the word should be increased, that is, the character spacings in the word are reduced by the second ratio, i.e., increased by the absolute value of the second ratio.

In this way, the character spacings in a same word are made same and the display is made more uniform. This way may be applied to the target text with the second type such that, in a case that different characters have different widths, the characters in a same word are displayed more uniformly. The typesetting example 4 can be carried out after any one of the above typesetting examples.

In an example, the local application typesets the widths and heights of the characters of the target text, and then adjusts the ascent-descent values of the characters of the target text based on the ascent-descent values of the characters corresponding to the original font.

The embodiments of the present disclosure have the following beneficial effect: if the local application of the terminal device does not support the original font of the target text, the local application uses the first font supported by itself to display the target text and typesets the target text based on the character measurement data of the original font. Thus, the local application can still maintain consistency between file typesetting and original typesetting in spite of loss of the original font.

As shown in FIG. 5, an embodiment of the present disclosure provides a text typesetting method. The method includes steps S702 to S706, which can be performed by a server.

At step S702, a font identifier of an original font of a target text is received from a terminal device.

At step S704, based on the font identifier of the original font, character measurement data of the original font is obtained.

At step S706, the character measurement data of the original font is sent to the terminal device, such that the terminal device typesets, based on the character measurement data of the original font, the target text displayed with a first font supported by a local application.

In an example, font attributes of various fonts and the character measurement data of various fonts under each font size are pre-stored in the server. The character measurement data of a font may include a height and a width of the font. The character measurement data of a font may further include an ascent-descent value of a character. The font attribute of a font refers to its inherent attribute, which can reflect a style of this font. The font attribute of a font may include one or more of a font weight, a blackening degree, and an oblique degree of the font.

In an example, before the terminal device displays the target text with the first font supported by its local application, the method further includes: based on the font identifier of the original font, obtaining a substitute font list of the original font; determining candidate fonts from substitute fonts in the substitute font list, where the candidate fonts are fonts supported by the local application; determining a candidate font most matching the original font in the candidate fonts as a first font; sending a font identifier of the first font to the terminal device.

In an example, before the terminal device displays the target text with the first font supported by its local application, the method further includes: sending the font attribute of the original font and a width of a preset character string under the original font to the terminal, such that the terminal device, based on the font attribute of the original font and the width of the preset character string under the original font, determines the first font from the candidate fonts, where the candidate fonts are font supported by the local application of the terminal device and the preset character string includes multiple different preset characters.

In an example, before the terminal device displays the target text with the first font supported by its local application, the method further includes: determining the first font from candidate fonts based on the font attribute of the original font and a width of a preset character string under the original font, and sending a font identifier of the first font to the terminal device, where the candidate fonts are fonts supported by the local application of the terminal device, and the preset character string includes multiple different preset characters.

In an example, the candidate fonts include a default font and non-default fonts supported by the local application.

In an example, determining the first font from the candidate fonts based on the font attribute of the original font and the width of the preset character string under the original font includes: if the default font has the same font attribute as the original font and a similarity between the width of the preset character string under the default font and the width of the preset character string under the original font is in compliance with a preset criterion, determining the default font as the first font; otherwise, determining the candidate fonts having the same font attribute as the original font as target fonts and determining the first font from the target fonts.

In an example, determining whether the similarity between the width of the preset character string under the default font and the width of the preset character string under the original font is in compliance with the preset criterion includes: determining a difference value between the width of the preset character string under the default font and the width of the preset character string under the original font as a fourth difference value; determining a ratio of an absolute value of the fourth difference value to the width of the preset character string under the original font as a first ratio; in response to that the first ratio is less than or equal to a preset first threshold, determining the similarity between the width of the preset character under the default font and the width of the preset character string under the original font is in compliance with the preset criterion; in response to that the first ratio is greater than the preset first threshold, determining the similarity between the width of the preset character under the default font and the width of the preset character string under the original font is not in compliance with the preset criterion.

In an example, determining the first font from the target fonts includes: determining the target font with the width of the present character string closest to the width of the preset character string under the original font as the first font; or, determining a target font with the width of the preset character string being minimal as the first font.

The embodiments of the present disclosure have the following beneficial effect: if the local application of the terminal device does not support the original font of the target text, the server sends the character measurement data of the original font to the terminal device, such that the terminal device can, based on the character measurement data of the original font, typeset the target text displayed with the first font supported by the local application. Thus, the local application can still maintain consistency between file typesetting and original typesetting in spite of loss of the original font.

<Device embodiment>

An embodiment of the present disclosure provides a text typesetting apparatus, which includes the following modules:

a first determining module, configured to determine an original font used by a target text;
a second determining module, configured to determine whether a local application supports the original font;
an obtaining module, configured to, in response to that the local application does not support the original font, obtain character measurement data of the original font;
a typesetting module, configured to typeset, based on the character measurement data of the original font, the target text displayed with a first font supported by the local application of the terminal device.

In an example, obtaining the character measurement data of the original font includes one of: obtaining the character measurement data of the original font from a local cache of the terminal device; when the character measurement data of the original font is not obtained from the local cache of the terminal device, obtaining the character measurement data of the original font from the server and storing the character measurement data of the original font in the local cache.

In an example, displaying the target text with the first font supported by the local application further includes: selecting the first font matching the original font from all fonts supported by the local application, and displaying the target text with the selected first font.

In an example, selecting the first font matching the original font from all fonts supported by the local application includes: obtaining a substitute font list of the original font; determining candidate fonts from substitute fonts of the substitute font list, where the candidate fonts are fonts supported by the local application; determining a candidate font having a highest matching degree with the original font in the candidate fonts as the first font.

In an example, displaying the target text with the first font supported by the local application includes: determining a character type of the target text; based on a preset rule associated with the character type of the target text, selecting the first font matching the original font from all fonts supported by the local application; displaying the target text with the selected first font.

In an example, the character measurement data of the original font includes a character width of the original font and a character height of the original font. Selecting the first font matching the original font from all fonts supported by the local application includes: obtaining character measurement data of candidate fonts, where the candidate fonts are fonts supported by the local application; determining a typesetting direction of the target text; in response to that the typesetting direction of the target text is horizontal typesetting, determining a candidate font with the character width closest to the character width of the original font as the first font; in response to that the typesetting direction of the target text is vertical typesetting, determining a candidate font with the character height closest to the character height of the original font as the first font.

In an example, the character measurement data of the original font includes a character width of the original font and a character height of the original font.

Selecting the first font matching the original font from all fonts supported by the local application includes: obtaining a font attribute of the original font and font attributes of candidate fonts, where the candidate fonts are fonts supported by the local application; determining candidate fonts each with the font attribute same as the font attribute of the original font as target fonts; obtaining character measurement data of the target fonts; determining a typesetting direction of the target text; in response to that the typesetting direction of the target text is horizontal typesetting, determining a target font with the character width closest to the character width of the original font as the first font; in response to that the typesetting direction of the target text is vertical typesetting, determining a target font with the character height closest to the character height of the original font as the first font.

In an example, in response to that the character type of the target text is a letter type or a multilanguage mixed type, based on the preset rule associated with the character type, selecting the first font matching the original font from all fonts supported by the local application includes: sending font identifiers of the candidate fonts to a server, such that the server determines the first font from the candidate fonts based on the font attribute of the original font and a width of a preset character string under the original font, and receiving a font identifier of the first font from the server; or, obtaining the font attribute of the original font and the width of the preset character string under the original font from the server, and based on the font attribute of the original font and the width of the preset character string under the original font, determining the first font from the candidate fonts; where the candidate fonts are fonts supported by the local application, and the preset character string includes multiple different preset characters.

In an example, the candidate fonts include a default font and non-default fonts supported by the local application.

Based on the font attribute of the original font and the width of the preset character string under the original font, determining the first font from the candidate fonts include: if the default font has the same font attribute as the original font and a similarity between a width of the preset character string under the default font and the width of the preset character string under the original font is in compliance with a preset criterion, determining the default font as the first font; otherwise, taking the candidate fonts having the same font attribute as the original font as the target fonts, and determining the first font from the target fonts.

In an example, determining whether the similarity between the width of the preset character string under the default font and the width of the preset character string under the original font is in compliance with the preset criterion includes: determining a difference value between the width of the preset character string under the default font and the width of the preset character string under the original font as a fourth difference value; determining a ratio of an absolute value of the fourth difference value to the width of the preset character string under the original font as a first ratio; in response to that the first ratio is less than or equal to a preset first threshold, determining the similarity between the width of the preset character string under the default font and the width of the preset character string under the original font is in compliance with the preset criterion.

In an example, determining the first font from the target fonts includes: determining a target font with the width of the preset character string closest to the width of the preset character string under the original font as the first font; or, determining the target font with the width of the preset character string being minimal as the first font.

In an example, the character measurement data of the original font includes a character width of the original font and a character height of the original font.

Typesetting the target text based on the character measurement data of the original font includes: determining a typesetting direction of the target text; in response to that the typesetting direction of the target text is horizontal typesetting, determining a first difference value, where the first difference value is a difference value between character widths of the characters of the target text under the original font and under the first font; in response to that the first difference value is a positive value, adjusting abscissa values of the characters of the target text displayed with the first font; in response to that the first difference value is a negative value, performing scale-down processing on the characters of the target text displayed with the first font; in response to that the typesetting direction of the target text is vertical typesetting, determining a second difference value, where the second difference value is a difference value between character heights of the characters of the target text under the original font and under the first font; in response to that the second difference value is a positive value, adjusting ordinate values of the characters of the target text displayed with the first font; in response to that the second difference value is a negative value, performing scale-down processing on the characters of the target text displayed with the first font.

In an example, the character measurement data of the original font includes a character width of the original font.

Typesetting the target text based on the character measurement data of the original font includes: cutting the target text into words; accumulating difference values between widths of respective characters in each word under the first font and under the original font to obtain an adjustment amount; calculating a ratio of the adjustment amount to a number of character spacings in the word as a second ratio; based on the second ratio, adjusting the character spacings in the word to enable the character spacings in the word to be same.

An embodiment of the present disclosure provides a text typesetting apparatus, which includes the following modules:

a receiving module, configured to receive a font identifier of an original font of a target text from a terminal device;
a retrieving module, configured to obtain character measurement data of the original font based on the font identifier of the original font;
a sending module, configured to send the character measurement data of the original font to the terminal device, such that terminal device, based on the character measurement data of the original font, typesets the target text displayed with a first font supported by a local application of the terminal device.

In an example, the terminal device displays the target text with the first font supported by its local application, which includes: obtaining, based on the font identifier of the original font, a substitute font list of the original font; determining candidate fonts from substitute fonts in the substitute font list, where the candidate fonts are fonts supported by the local application; determining a candidate font ranked topmost in the candidate fonts as the first font; sending a font identifier of the first font to the terminal device; displaying the target text with the selected first font.

In an example, the sending module is further configured to: send the font attribute of the original font and a width of a preset character string under the original font to the terminal, such that the terminal device determines, based on the font attribute of the original font and the width of the preset character string under the original font, the first font from candidate fonts; or, determine based on the font attribute of the original font and the width of the preset character string under the original font, the first font from candidate fonts, and send a font identifier of the first font to the terminal device. The candidate fonts are fonts supported by the local application, and the preset character string includes multiple different preset characters.

In an example, the candidate fonts include a default font and non-default fonts supported by the local application.

Based on the font attribute of the original font and the width of the preset character string under the original font, determining the first font from the candidate fonts includes: if the default font has the same font attribute as the original font and a similarity between a width of the preset character string under the default font and the width of the preset character string under the original font is in compliance with a preset criterion, determining the default font as the first font; otherwise, taking the candidate fonts having the same font attribute as the original font as the target fonts, and determining the first font from the target fonts.

In an example, determining whether the similarity between the width of the preset character string under the default font and the width of the preset character string under the original font is in compliance with the preset criterion includes: determining a difference value between the width of the preset character string under the default font and the width of the preset character string under the original font as a fourth difference value; determining a ratio of an absolute value of the fourth difference value to the width of the preset character string under the original font as a first ratio; in response to that the first ratio is less than or equal to a preset first threshold, determining the similarity between the width of the preset character string under the default font and the width of the preset character string under the original font is in compliance with the preset criterion.

In an example, determining the first font from the target fonts includes: determining a target font with the width of the preset character string closest to the width of the preset character string under the original font as the first font; or, determining the target font with the width of the preset character string being minimal as the first font.

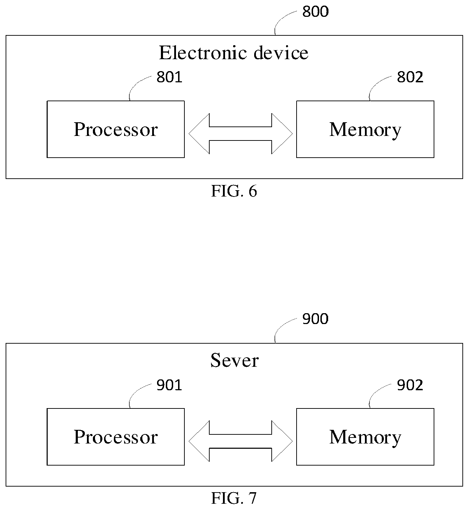

FIG. 6 is a schematic diagram illustrating a hardware structure of an electronic device according to embodiments of the present disclosure.

As shown in FIG. 6, the electronic device 800 includes a processor 801 and a memory 802, where the memory 802 is configured to store executable computer programs and the processor 801 is configured to execute the computer programs to perform the text typesetting methods in any one of the above embodiments.

The electronic device 800 may be a computer, a smart phone or a tablet computer or the like.

In an example, the electronic device may be the above terminal device.

FIG. 7 is a schematic diagram illustrating a hardware structure of a server according to embodiments of the present disclosure.

As shown in FIG. 7, the server 900 includes a processor 901 and a memory 902, where the memory 902 is configured to store executable computer programs and the processor 901 is configured to execute the computer programs to perform the text typesetting method in any one of the above embodiments.

<Computer readable storage medium>

An embodiment of the present disclosure provides a computer readable storage medium, storing computer programs thereon, where the computer programs are executed by a processor to perform the text typesetting method in any one of the above embodiments.

The preset disclosure may be a system, a method, and/or a computer program product. The computer program product may include a computer readable storage medium, storing computer readable program instructions enabling a processor to achieve each aspect of the present disclosure.

The computer readable storage medium may be a tangible device holding and storing instructions used by an instruction executing device. The computer readable storage medium may be, for example, but not limited to, an electric storage device, a magnetic storage device, an optical storage device, an electromagnetic storage device, a semiconductor storage device, or any combination thereof. More specific examples (non-exhaustive list) of the computer readable storage medium include a portable computer disk, a hard disk, a Random Access Memory (RAM), a Read Only Memory (ROM), an Erasable Programmable Read-Only Memory (EPROM), a Static Random Access Memory (SRAM), a portable compact disk-read-only memory (CD-ROM), a digital versatile disk (DVD), a memory stick, a floppy disk, a mechanical encoding device, a punched card storing instructions, or a groove convex structure or any proper combination thereof. The computer readable storage medium used herein is not interpreted as transient signal itself, such as radio wave or other freely-propagating electromagnetic wave, electromagnetic wave propagating through waveguide or other transmission mediums (for example, optical pulse through optical fiber cable), or electrical signal transmitted through power line.

The computer readable program instructions described herein may be downloaded to various computing/processing devices from the computer readable storage medium or downloaded to an external computer or external storage device through a network such as internet, local area network, wide area network and/or wireless network. The network may include copper transmission cable, optical fiber transmission, wireless transmission, router, firewall, switch, gateway computer and/or edge server. A network adapter card or a network interface in each computing/processing device receives computer readable program instructions from the network and forwards the computer readable program instructions for storage in the computer readable storage mediums of various computing/processing devices.

The computer program instructions for executing the operations of the present disclosure may be assembly instructions, instruction set architecture (ISA) instructions, machine instructions, machine-related instructions, microcodes, firmware instructions, state setting data, or source codes or target codes written in any combination of one or more programming languages. The programming language includes an object-oriented programming language such as Smalltalk and C++, and a regular procedural programming language such as C language or similar programming language. The computer readable program instructions may be executed entirely on a user computer, executed partially on a user computer, executed as an independent software package, executed partially on a user computer and partially on a remote computer, or executed entirely on a remote computer or server. In a case of a remote computer involved, the remote computer may be connected to the user computer through any type of network including a local area network (LAN) or a wide area network (WAN), or connected to an external computer, for example, through an internet provided by an internet service provider. In some examples, state information of the computer readable program instructions may be used to customize an electronic circuit such as a programmable logic circuit, a field programmable gate array (FPGA), or a programmable logic array (PLA), which can execute the computer readable program instructions to perform various aspects of the present disclosure.

Various aspects of the present disclosure are described by referring to the flowcharts and/or block diagrams of methods, apparatuses (systems) and computer readable program products according to the examples of the present disclosure. It should be understood that each block of the flowcharts and/or block diagrams and any combination of various blocks of the flowcharts and/or block diagrams may be implemented by the computer readable program instructions.

These computer program instructions may be provided to a general-purpose computer, a dedicated computer, or a processor of another programmable data processing device to generate a machine, such that the instructions are executed by a computer or a processor of another programmable data processing device to generate an apparatus for implementing function/action designated in one or more blocks of the flowcharts and/or block diagrams. These computer readable program instructions may also be stored the computer readable storage medium to enable the computer, programmable data processing device and/or another device to operate in a specific manner. In this case, the computer readable storage medium storing instructions may include one product including instructions for implementing various aspects of function/action designated in one or more blocks of the flowcharts and/or block diagrams.

These computer readable program instructions may also be loaded onto a computer, another programmable data processing device, or other devices to enable the computer, another programmable data processing device, or other devices to perform a series of operation steps so as to generate a computer-implemented process, such that the instructions executable on the computer, another programmable data processing device, or other devices realize function/action designated in one or more blocks of the flowcharts and/or block diagrams.

The flowcharts and block diagrams in the accompanying drawings show the possibly-implemented system architecture, function and operation of the system, method, and computer readable program products in several examples of the present disclosure. At this point, each block in the flowcharts and/or block diagrams may represent a part of one module, program segment or instruction, which includes one or more executable instructions for realizing the designated logic functions. In some alternative implementations, the functions indicated in the blocks may also occur in a sequence different from the sequence indicated in the accompanying drawings. For example, two consecutive blocks may actually be performed in parallel or sometime performed in a reverse sequence, which depends on the functions involved. It is also noted that each block or any combination of blocks of the flowcharts and/or block diagrams may be realized by a dedicated hardware-based system used for performing the designated functions or actions, or realized by a combination of a dedicated hardware and a computer instruction. It is well known to those skilled in the arts that the implementations by hardware, by software and by combination of hardware and software are equivalent.

The examples of the present disclosure described as above are illustrative and non-exhaustive and are not limited to these examples disclosed herein. It is apparent that many changes and modifications may be made by those skilled in the art without departing from the scope and spirit of the examples of the present disclosure. The selection of terms used herein is intended to best explain the principle and the practical applications of different examples or technical improvements in market, or different examples helping other ordinary persons skilled in the art to understand the present disclosure. The scope of protection of the present disclosure shall be defined by the appended claims.

**Claims**

1. A text typesetting method, applied to a local application running in a terminal device, and comprising:

   determining an original font used by a target text;
   determining whether the local application supports the original font;
   in response to that the local application does not support the original font, obtaining character measurement data of the original font;
   displaying the target text with a first font supported by the local application; and
   typesetting, based on the character measurement data of the original font, the displayed target text.

2. The method of claim 1, wherein obtaining the character measurement data of the original font comprises any one of:

   obtaining the character measurement data of the original font from a local cache of the terminal device; or
   in response to not obtaining the character measurement data of the original font from the local cache of the terminal device, obtaining the character measurement data of the original font from a server.

3. The method of claim 1, wherein displaying the target text with the first font supported by the local application comprises:

   selecting the first font matching the original font from all fonts supported by the local application; and
   displaying the target text with the selected first font.

4. The method of claim 3, wherein selecting the first font matching the original font from all fonts supported by the local application comprises:

   obtaining a substitute font list of the original font;
   determining candidate fonts from substitute fonts of the substitute font list, wherein the candidate fonts are fonts supported by the local application; and
   determining a candidate font having a highest matching degree with the original font in the candidate fonts as the first font.

5. The method of claim 1, wherein displaying the target text with the first font supported by the local application comprises:

   determining a character type of the target text;
   selecting, based on a preset rule associated with the character type of the target text, the first font matching the original font from all fonts supported by the local application; and
   displaying the target text with the selected first font.

6. The method of claim 3 or 5, wherein the character measurement data of the original font comprises a character width of the original font and a character height of the original font; selecting the first font matching the original font from all fonts supported by the local application comprises:

   obtaining character measurement data of candidate fonts, wherein the candidate fonts are fonts supported by the local application;
   determining a typesetting direction of the target text;
   in response to that the typesetting direction of the target text is horizontal typesetting, determining a candidate font with a character width closest to the character width of the original font as the first font; and
   in response to that the typesetting direction of the target text is vertical typesetting, determining a candidate font with a character height closest to the character height of the original font as the first font.

7. The method of claim 3 or 5, wherein the character measurement data of the original font comprises a character width of the original font and a character height of the original font; selecting the first font matching the original font from all fonts supported by the local application comprises:

   obtaining a font attribute of the original font and font attributes of candidate fonts, wherein the candidate fonts are fonts supported by the local application;
   determining candidate fonts each with the font attribute same as the font attribute of the original font as target fonts;
   obtaining character measurement data of the target fonts;
   determining a typesetting direction of the target text;
   in response to that the typesetting direction of the target text is horizontal typesetting, determining a target font with a character width closest to the character width of the original font as the first font; and

in response to that the typesetting direction of the target text is vertical typesetting, determining a target font with a character height closest to the character height of the original font as the first font.

8. The method of claim 5, wherein in response to that the character type of the target text comprises a letter type or a multi-language hybrid type, based on the preset rule associated with the character type of the target text, selecting the first font matching the original font from all fonts supported by the local application comprises:

sending font identifiers of candidate fonts to a server, such that the server determines the first font from the candidate fonts based on the font attribute of the original font and a width of a preset character string under the original font, and receiving the font identifier of the first font from the server; or

obtaining the font attribute of the original font and the width of the preset character string under the original font from the server, and determining, based on the font attribute of the original font and the width of the preset character string under the original font, the first font from the candidate fonts;

wherein the candidate fonts are fonts supported by the local application, and the preset character string comprises multiple different preset characters.

9. The method of claim 8, wherein the candidate fonts comprise a default font and non-default fonts supported by the local application; based on the font attribute of the original font and the width of the preset character string under the original font, determining the first font from the candidate fonts comprises:

in response to determining that the default font has a same font attribute as the original font and a similarity between a width of a preset character string under the default font and the width of the preset character string under the original font is in compliance with a preset criterion, determining the default font as the first font; and

in response to determining at least one of that the default font has a different font attribute with the original font or that the similarity between the width of the preset character string under the default font and the width of the preset character string under the original font is not in compliance with the preset criterion, taking the candidate fonts having a same font attribute as the original font as the target fonts, and determining the first font from the target fonts.

10. The method of claim 9, wherein determining whether the similarity between the width of the preset character string under the default font and the width of the preset character string under the original font is in compliance with the preset criterion comprises:

determining a difference value between the width of the preset character string under the default font and the width of the preset character string under the original font as a fourth difference value;

determining a ratio of an absolute value of the fourth difference value to the width of the preset character string under the original font as a first ratio; and

in response to that the first ratio is less than or equal to a preset first threshold, determining the similarity between the width of the preset character string under the default font and the width of the preset character string under the original font is in compliance with the preset criterion.

11. The method of claim 9, wherein determining the first font from the target fonts comprises:

determining a target font with a width of the preset character string closest to the width of the preset character string under the original font as the first font; or

determining the target font with the width of the preset character string being minimal as the first font.

12. The method of claim 1, wherein the character measurement data of the original font comprises a character width of the original font and a character height of the original font; typesetting the displayed target text based on the character measurement data of the original font comprises:

determining a typesetting direction of the target text;

in response to that the typesetting direction of the target text is horizontal typesetting,

determining a first difference value, wherein the first difference value is a difference value between character widths of characters of the target text under the original font and under the first font;

in response to that the first difference value is a positive value, adjusting abscissa values of characters of the target text displayed with the first font;

in response to that the first difference value is a negative value, performing scale-down processing on the characters of the target text displayed with the first font; and

in response to that the typesetting direction of the target text is vertical typesetting,

determining a second difference value, wherein the second difference value is a difference value between character heights of the characters of the target text under the original font and under the first font;
in response to that the second difference value is a positive value, adjusting ordinate values of the characters of the target text displayed with the first font;
in response to that the second difference value is a negative value, performing scaledown processing on the characters of the target text displayed with the first font.

13. The method of claim 1 or 12, wherein the character measurement data of the original font comprises a character width of the original font; typesetting the target text based on the character measurement data of the original font comprises:

cut the target text into words;
for each word of the words, accumulating difference values between widths of each character in the word under the first font and under the original font to obtain an adjustment amount;
calculating a ratio of the adjustment amount to a number of character spacings in the word as a second ratio; and
based on the second ratio, adjusting the character spacings in the word to enable the character spacings in the word to be same.

14. A text typesetting method, applied to a server, and comprising:

receiving a font identifier of an original font of a target text from a terminal device;
obtaining, based on the font identifier of the original font, character measurement data of the original font; and
sending the character measurement data of the original font to the terminal device such that the terminal device typesets, based on the character measurement data of the original font, the target text displayed with a first font supported by a local application of the terminal device.

15. A text typesetting apparatus, comprising:

a first determining module, configured to determine an original font used by a target text;
a second determining module, configured to determine whether a local application supports the original font;
an obtaining module, configured to obtain, in response to that the local application does not support the original font, character measurement data of the original font; and
a typesetting module, configured to typeset, based on the character measurement data of the original font, the target text displayed with a first font supported by the local application of the terminal device.

16. A text typesetting apparatus, comprising:

a receiving module, configured to receive a font identifier of an original font of a target text from a terminal device;
a retrieving module, configured to obtain character measurement data of the original font based on the font identifier of the original font; and
a sending module, configured to send the character measurement data of the original font to the terminal device, such that terminal device typesets, based on the character measurement data of the original font, the target text displayed with a first font supported by a local application of the terminal device.

17. An electronic device, comprising a memory and a processor, wherein the memory is configured to store computer programs; the processor is configured to execute the computer programs to perform the method of any one of claims 1 to 13.

18. A server, comprising a memory and a processor, wherein the memory is configured to store computer programs; and the processor is configured to execute the computer programs to perform the method of claim 14.

19. A computer readable storage medium, storing computer programs, wherein the computer programs are executed by a processor to perform the method of any one of claims 1 to 14.

FIG. 1

Server
101

Network
102

Terminal
device
103

Terminal
device
103

...
...
...

Terminal
device
103

Processor
1011

Input
apparatus
1015

Memory
1012

Output
apparatus
1016

Interface
apparatus
1013

communi
cation
apparatus
1014

Processor
1031

Display
apparatus
1036

Memory
1032

Input
apparatus
1037

Interface
apparatus
1033

Loudspeaker
1038

Communicati
on apparatus
1034

Microphone
1039

GPU
1035

CAmera
1030

S102

Determine an original font used by a target text

S104

Determine whether a local application supports the original font

S106

Obtain, in response to that the local application does not support the original font, character measurement data of the original font

S108

Display the target text with a first font supported by the local application, and typeset based on the character measurement data of the original font

FIG. 2

FIG. 3(a)

FIG. 3(b)

Original font

First font
(before typesetting)

First font
(after typesetting)

FIG. 4

S702

Receive a font identifier of an original font of a target text from a terminal device

S704

Obtain, based on the font identifier of the original font, character measurement data of the original font

S706

Send the character measurement data of the original font to the terminal device, such that the terminal device typesets, based on the character measurement data of the original font, the target text displayed with a first font supported by a local application

FIG. 5

800

| Electronic device |
|---|
| 801 |
| 802 |
| Processor | Memory |

FIG. 6

900

| Sever |
|---|
| 901 |
| 902 |
| Processor | Memory |

FIG. 7

# EP 4 379 596 A1

<table>
<tr><td colspan="2">INTERNATIONAL SEARCH REPORT</td><td>International application No.<br>**PCT/CN2021/142042**</td></tr>
</table>

**A.    CLASSIFICATION OF SUBJECT MATTER**

G06F 40/109(2020.01)i;  G06F 40/106(2020.01)i;  G06F 40/166(2020.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 字体, 排版, 支持, 存在, 候选, 本地, 属性, 宽度, 横, 竖, font, typesetting, set type, support, exist, presence, candidate, local, attribute, width, horizontal, vertical

**C.    DOCUMENTS CONSIDERED TO BE RELEVANT**

| Category* | Citation of document, with indication, where appropriate, of the relevant passages | Relevant to claim No. |
|---|---|---|
| PX | CN 113642289 A (ZHUHAI KINGSOFT OFFICE SOFTWARE CO., LTD. et al.) 12 November 2021 (2021-11-12)<br>claims 1-24 | 1-19 |
| PX | CN 113642290 A (ZHUHAI KINGSOFT OFFICE SOFTWARE CO., LTD. et al.) 12 November 2021 (2021-11-12)<br>claims 1-15 | 1-19 |
| X | CN 113051235 A (PING AN PUHUI ENTERPRISE MANAGEMENT CO., LTD.) 29 June 2021 (2021-06-29)<br>description, paragraphs [0029] -[0050] and [0105]-[0141] | 1-19 |
| A | CN 109992749 A (ZHUHAI KINGSOFT OFFICE SOFTWARE CO., LTD. et al.) 09 July 2019 (2019-07-09)<br>entire document | 1-19 |
| A | CN 113283217 A (ZHUHAI KINGSOFT OFFICE SOFTWARE CO., LTD. et al.) 20 August 2021 (2021-08-20)<br>entire document | 1-19 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 May 2022** | **30 May 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| International application No. |
|---|
| **PCT/CN2021/142042** |

**C.    DOCUMENTS CONSIDERED TO BE RELEVANT**

| Category* | Citation of document, with indication, where appropriate, of the relevant passages | Relevant to claim No. |
|---|---|---|
| A | US 2013332824 A1 (BEIJING FOUNDER APABI TECHNOLOGY LTD. et al.) 12 December 2013 (2013-12-12)<br>entire document | 1-19 |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 113642289 | A | 12 November 2021 | None | | | |
| CN | 113642290 | A | 12 November 2021 | None | | | |
| CN | 113051235 | A | 29 June 2021 | None | | | |
| CN | 109992749 | A | 09 July 2019 | None | | | |
| CN | 113283217 | A | 20 August 2021 | None | | | |
| US | 2013332824 | A1 | 12 December 2013 | CN | 103488616 | A | 01 January 2014 |

**INTERNATIONAL SEARCH REPORT**
Information on patent family members

International application No.

**PCT/CN2021/142042**

Form PCT/ISA/210 (patent family annex) (January 2015)